(19) Europäisches Patentamt
European Patent Office
Office européen des brevets

(11) **EP 4 726 903 A1**

(12) **EUROPEAN PATENT APPLICATION**
published in accordance with Art. 153(4) EPC

(43) Date of publication:
**15.04.2026 Bulletin 2026/16**

(21) Application number: **24849350.4**

(22) Date of filing: **11.06.2024**

(51) International Patent Classification (IPC):
$H01M\ 50/46^{(2021.01)}$    $H01M\ 50/446^{(2021.01)}$
$H01M\ 50/414^{(2021.01)}$    $H01M\ 50/457^{(2021.01)}$
$H01M\ 50/417^{(2021.01)}$    $H01M\ 50/431^{(2021.01)}$
$H01M\ 50/403^{(2021.01)}$

(52) Cooperative Patent Classification (CPC):
**H01M 50/403; H01M 50/414; H01M 50/417;
H01M 50/431; H01M 50/446; H01M 50/457;
H01M 50/46;** Y02E 60/10

(86) International application number:
**PCT/KR2024/007936**

(87) International publication number:
**WO 2025/028779 (06.02.2025 Gazette 2025/06)**

(84) Designated Contracting States:
**AL AT BE BG CH CY CZ DE DK EE ES FI FR GB
GR HR HU IE IS IT LI LT LU MC ME MK MT NL
NO PL PT RO RS SE SI SK SM TR**
Designated Extension States:
**BA**
Designated Validation States:
**GE KH MA MD TN**

(30) Priority: **02.08.2023 KR 20230101281**

(71) Applicants:
• **W-Scope Korea Co., Ltd.
Cheongju-si, Chungcheongbuk-do 28122 (KR)**
• **W-Scope Chungju Plant Co., Ltd.
Daesowon-myeon
Chungju-si, Chungcheongbuk-do
27461 (KR)**

(72) Inventors:
• **GONG, Seok Hyeon
Cheongju-si, Chungcheongbuk-do 28122 (KR)**
• **PARK, Dae Bog
Cheongju-si, Chungcheongbuk-do 28122 (KR)**
• **LEE, Jong Hyuk
Cheongju-si, Chungcheongbuk-do 28122 (KR)**
• **KIM, Byung Hyun
Cheongju-si, Chungcheongbuk-do 28122 (KR)**

(74) Representative: **BCKIP Part mbB
MK1
Landsbergerstraße 98, 3.Stock
80339 München (DE)**

(54) **SEPARATOR AND MANUFACTURING METHOD THEREFOR**

(57) According to one aspect of the present invention, there is provided a separator comprising: a porous substrate; an electrode adhesive layer provided on one surface of the porous substrate and including first inorganic particles and a first binder that mutually binds at least a part of the first inorganic particles to each other; and a heat-resistant layer provided on the other surface of the porous substrate and including second inorganic particles and a second binder that mutually binds at least a part of the second inorganic particles to each other, wherein the content of the first binder in the electrode adhesive layer is from 3 to 20 wt%. The present invention also provides a method for manufacturing the separator.

FIG. 1

# Description

## [Technical Field]

The present invention relates to a separator and a method for manufacturing the same.

## [Background Art]

Lithium secondary batteries are widely used as power sources for various electronic devices such as smartphones, laptop computers, and tablet PCs, which require miniaturization and light weight, and as the application fields expand to medium and large batteries for smart grids and electric vehicles, there is a demand for developing lithium secondary batteries having large capacity, long lifetime, and high safety.

As a means to achieve the above purpose, a separator having fine pores formed therein, which separates a positive electrode and a negative electrode to prevent internal short circuits and allows smooth migration of lithium ions during charge and discharge, is being widely studied. In particular, research and development are active for microporous separators using polyolefins such as polyethylene, which are advantageous for pore formation through thermally induced phase separation, economical, and easy to satisfy the physical properties required for separators.

Polyolefin-based separators widely used in the prior art have poor heat resistance and mechanical strength, and when exposed to a temperature of about 150°C for one hour, a thermal shrinkage rate of from 50 to 90% occurs, resulting in the loss of separator function and a high possibility of internal short circuits when subjected to external impact. To overcome such problems, a technique of coating a heat-resistant layer containing ceramic particles on the surface of the separator has been proposed.

However, such a heat-resistant layer still leaves significant technical challenges regarding air permeability and conductivity (resistance), which are crucial factors affecting separator performance. Specifically, when a heat-resistant layer containing ceramic particles is formed on the surface of a porous substrate, although the heat resistance of the separator is improved, the ceramic particles included in the heat-resistant layer close the pores formed in the porous substrate, thereby reducing the air permeability of the separator. Consequently, the ion transport path between the positive and negative electrodes is greatly reduced, resulting in significantly degraded charge and discharge performance of the secondary battery. In addition, as the heat-resistant layer is continuously exposed to an electrolyte inside the battery, the ceramic particles may partially and continuously peel off from the porous substrate, which in turn may gradually reduce the heat resistance of the separator.

Meanwhile, attempts have been made to further form an adhesive layer containing an adhesive material on a polyolefin-based separator or heat-resistant layer in order to improve the adhesion with the electrode and consequently improve the cycle life characteristics of the secondary battery. However, such an adhesive layer lowers the air permeability and conductivity of the separator, and since forming the adhesive layer on top of the heat-resistant layer requires at least two coating and drying processes, productivity and economic efficiency are reduced.

To address this, methods have been proposed in which the heat-resistant layer includes a certain amount of adhesive material to impart a predetermined adhesive force, or asymmetric coating is performed by forming an adhesive layer and a heat-resistant layer on opposite sides of the separator. However, in the former case, because the inclusion of the adhesive material relatively reduces the content of ceramic particles in the heat-resistant layer, a trade-off occurs between adhesion and heat resistance, and in the latter case, due to differences in weight, moisture content, and drying speed between the adhesive layer and the heat-resistant layer, curling occurs in the machine direction (MD) and/or transverse direction (TD), causing assembly defects in batteries.

## [Detailed Description of the Invention]

### [Technical Problem]

The present invention has been made to solve the problems of the prior art described above, and an object of the present invention is to provide a separator and a method for manufacturing the same which can realize and improve electrode adhesion, heat resistance, conductivity, and productivity in a balanced manner, while at the same time suppressing curling phenomena.

### [Technical Solution]

According to one aspect of the present invention, there is provided a separator comprising: a porous substrate; an electrode adhesive layer provided on one surface of the porous substrate and including first inorganic particles and a first binder that mutually binds at least a part of the first inorganic particles to each other; and a heat-resistant layer provided on the other surface of the porous substrate and including second inorganic particles and a second binder that mutually binds at least a part of the second inorganic particles to each other, wherein the content of the first binder in the electrode adhesive layer is 3 to 20 wt%.

In one embodiment, the porous substrate may include at least one selected from the group consisting of polyethylene, polypropylene, polybutylene, polymethylpentene, ethylene-vinyl acetate, ethylene-butyl acrylate, ethylene-ethyl acrylate, and copolymers or combinations of two or more thereof.

In one embodiment, the average particle size of each of the first inorganic particles and the second inorganic particles may be 100 to 500 nm.

In one embodiment, each of the first inorganic particles and the second inorganic particles may include at least one selected from the group consisting of $SiO_2$, $AlO(OH)$, $Mg(OH)_2$, $Al(OH)_3$, $TiO_2$, $BaTiO_3$, $Li_2O$, $LiF$, $LiOH$, $Li_3N$, $BaO$, $Na_2O$, $Li_2CO_3$, $CaCO_3$, $LiAlO_2$, $Al_2O_3$, $SiO$, $SnO$, $SnO_2$, $PbO_2$, $ZnO$, $P_2O_5$, $CuO$, $MoO$, $V_2O_5$, $B_2O_3$, $Si_3N_4$, $CeO_2$, $Mn_3O_4$, $Sn_2P_2O_7$, $Sn_2B_2O_5$, $Sn_2BPO_6$, and combinations of two or more thereof.

In one embodiment, the first binder may be an organic particle including a water-insoluble polymer, and the second binder may include a water-soluble polymer.

In one embodiment, the average particle size of the organic particle may be equal to or greater than the average particle size of each of the first inorganic particles and the second inorganic particles.

In one embodiment, the average particle size of the organic particle may be 500 to 1,000 nm.

In one embodiment, the curl height of the separator may be 1.5 cm or less, and the curl height may be measured according to the following steps (1) and (2):

(1) Placing a separator having a length (machine direction, MD) and a width (transverse direction, TD) of 300 mm each on a horizontal reference plane such that the electrode adhesive layer faces the horizontal reference plane; and (2) Measuring the height by which both ends of the separator in the machine direction (MD) and in the transverse direction (TD) are vertically spaced apart from the horizontal reference plane after 2 hours under conditions of temperature 21°C and humidity having a dew point of -10°C or less, and calculating an average value thereof.

In one embodiment, the separator may satisfy at least one of the following conditions (i) to (iv):

(i) Electrode adhesion strength: 5 gf/25 mm or higher; (ii) Resistance: 0.700 Ω or less; (iii) Thermal shrinkage rate in the machine direction (MD) at 150°C: 4.0% or less; and (iv) Thermal shrinkage rate in the transverse direction (TD) at 150°C: 4.0% or less.

Another aspect of the present invention provides a method for manufacturing a separator, comprising: (a) preparing a first coating slurry comprising first inorganic particles and a first binder that mutually binds at least a part of the first inorganic particles to each other; (b) preparing a second coating slurry comprising second inorganic particles and a second binder that mutually binds at least a part of the second inorganic particles to each other; (c) applying the first coating slurry to one surface of a porous substrate and drying to form an electrode adhesive layer; and (d) applying the second coating slurry to the other surface of the porous substrate and drying to form a heat-resistant layer, wherein the content of the first binder in solid content of the first coating slurry is 3 to 20 wt%, and steps (c) and (d) are performed simultaneously.

[Effect of the Invention]

According to one aspect of the present invention, the separator includes: a porous substrate; an electrode adhesive layer provided on one surface of the porous substrate and including first inorganic particles and a first binder that mutually binds at least a part of the first inorganic particles to each other; and a heat-resistant layer provided on the other surface of the porous substrate and including second inorganic particles and a second binder that mutually binds at least a part of the second inorganic particles to each other. By adjusting the content of the first binder in the electrode adhesive layer to from 3 to 20 wt%, electrode adhesion strength, heat resistance, and conductivity can be realized and improved in a balanced manner, and at the same time, curling can be effectively suppressed.

According to another aspect of the present invention, the method for manufacturing a separator can improve productivity of the asymmetric double-sided coated separator by simultaneously performing a step of forming the electrode adhesive layer by applying and drying the first coating slurry on one surface of the porous substrate, and a step of forming the heat-resistant layer by applying and drying the second coating slurry on the other surface of the porous substrate.

The effects of the present invention are not limited to the effects described above, and it should be understood that all effects that can be inferred from the configurations of the invention described in the detailed description or the claims are included in the scope of the present invention.

[Brief Description of the Drawings]

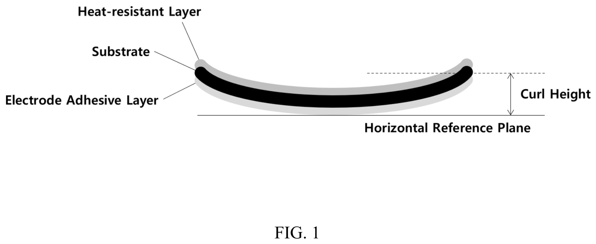

FIG. 1 is a schematic view illustrating the curling phenomenon and the method of measuring curl height of a separator according to one embodiment of the present invention.

**[Modes of the Invention]**

Hereinafter, the present invention will be described with reference to the accompanying drawings. However, the present invention may be implemented in various different forms and is not limited to the embodiments described herein. In addition, for clarity of explanation, parts not related to the description are omitted from the drawings, and like reference numerals are given to like parts throughout the specification.

Throughout the specification, when a part is referred to as being "connected" to another part, it should be understood to include both cases where the parts are "directly connected" to each other and cases where they are "indirectly connected" to each other with another member interposed therebetween. Also, when a part "includes" a component, it does not exclude the presence of other components unless otherwise stated, and means that other components may be further included.

Hereinafter, embodiments of the present invention will be described in detail with reference to the accompanying drawings.

According to one aspect of the present invention, there is provided a separator comprising: a porous substrate; an electrode adhesive layer provided on one surface of the porous substrate and including first inorganic particles and a first binder that mutually binds at least a part of the first inorganic particles to each other; and a heat-resistant layer provided on the other surface of the porous substrate and including second inorganic particles and a second binder that mutually binds at least a part of the second inorganic particles to each other, wherein the content of the first binder in the electrode adhesive layer is from 3 to 20 wt%.

The porous substrate may include a plurality of pores having substantially uniform average size, and such pores may contribute to improving the resistance characteristics and ionic conductivity of the separator. In addition, the porous substrate may have a high porosity and high mechanical strength, allowing the separator to be thinned to a desired thickness.

The porosity of the porous substrate may be from 30 to 90 vol%, preferably from 40 to 80 vol%, and more preferably from 40 to 70 vol%. The term "porosity" as used in the present specification means the ratio of the volume occupied by pores to the total volume of a porous article. When the porosity of the porous substrate is less than 30 vol%, air permeability and ionic conductivity may be decreased, and when it exceeds 90 vol%, mechanical properties such as tensile strength and puncture strength may be deteriorated.

The average pore size of the pores included in the porous substrate may be from 10 to 100 nm, preferably from 20 to 80 nm, and more preferably from 30 to 60 nm. When the average pore size is less than 10 nm, air permeability and ionic conductivity may be decreased, and when it exceeds 100 nm, mechanical properties such as tensile strength and puncture strength may be deteriorated.

From the viewpoint of film thickness and high energy density of an electrochemical device, the thickness of the porous substrate may be from 5 to 20 $\mu$m, preferably from 5 to 15 $\mu$m, and more preferably from 5 to 12 $\mu$m. When the thickness of the porous substrate is less than 5 $\mu$m, mechanical properties may be decreased, and when it exceeds 20 $\mu$m, air permeability and ionic conductivity may be decreased.

The porous substrate may include a polymer resin having electrical insulating properties, and the polymer resin may include a thermoplastic resin considering its shutdown characteristics. The term "shutdown characteristic" as used in the present specification means that when a battery is overheated and the temperature rises, the polymer resin melts to close the pores of the porous substrate, thereby blocking the movement of ions. From this viewpoint, the melting point of the polymer resin or the thermoplastic resin may be 200°C or less.

The thermoplastic resin may include, for example, at least one selected from the group consisting of polyethylene, polypropylene, polybutylene, polymethylpentene, ethylene-vinyl acetate, ethylene-butyl acrylate, and ethylene-ethyl acrylate, or a copolymer or combination of two or more thereof. Preferably, the thermoplastic resin may include at least one of polyethylene and polypropylene, and more preferably, polyethylene; however, the present invention is not limited thereto.

The polyethylene may be at least one selected from the group consisting of ultra-high molecular weight polyethylene (UHMWPE, Mw: from 1,000,000 to 7,000,000 g/mol), high molecular weight polyethylene (HMWPE, Mw: from 100,000 to 1,000,000 g/mol), high density polyethylene (HDPE, Mw: from 100,000 to 1,000,000 g/mol), low density polyethylene (LDPE, Mw: from 10,000 to 100,000 g/mol), homogeneous linear and linear low density polyethylene (LLDPE), and combinations thereof. The terms "weight average molecular weight" and "molecular weight distribution" as used in this specification may refer to values measured by gel permeation chromatography (GPC) using polystyrene as a standard sample according to methods described in literature such as Macromolecules, Vol. 34, No. 19, pp. 6812-6820 (2001).

For example, the polyethylene may be a high density polyethylene having a weight average molecular weight (Mw) of from 250,000 to 600,000. When the weight average molecular weight of the polyethylene exceeds 600,000, viscosity may increase, resulting in decreased processability. When it is less than 250,000, viscosity may become excessively low, thereby significantly reducing dispersibility with pore-forming agents, antioxidants, etc., used during the manufacture of the porous substrate, and, in some cases, phase separation or layer separation may occur.

The porous substrate may be subjected to hydrophilic treatment to sufficiently secure wettability of the slurry for forming the heat-resistant layer during coating, thereby improving the adhesion between the porous substrate and the heat-resistant layer. The contact angle of the hydrophilized porous substrate with respect to water ($H_2O$) may be 15° or less, and the absolute value of zeta potential measured as a negative value (-) on the surface of the porous substrate may be 10 mV or more, preferably 15 mV or more, and more preferably 20 mV or more.

The hydrophilized porous substrate may have hydrophilic functional groups such as - $SO_3$ groups generated on the surface and on the inner pore surface thereof, which are inherently hydrophilic. Due to the high affinity with the slurry, which is essentially hydrophilic, the heat-resistant layer can be easily bonded thereto, and the bonding strength can be enhanced. As a result, the durability of the separator can be significantly improved, and since the loss of the hydrophilic groups included in the porous substrate and/or the inorganic particles of the heat-resistant layer is minimized, the ionic conductivity and heat resistance can be improved.

The separator may include an electrode adhesive layer provided on one surface of the porous substrate, the electrode adhesive layer including first inorganic particles and a first binder that mutually binds at least a part of the first inorganic particles to each other. The electrode adhesive layer may also include a plurality of pores formed between and/or among the first inorganic particles and/or the first binder, through which fluids and/or ions can pass.

The content of the first binder in the electrode adhesive layer may be from 3 to 20 wt%, preferably from 3 to 15 wt%, and, correspondingly, the content of the first inorganic particles may be from 80 to 97 wt%, preferably from 85 to 97 wt%. When the content of the first binder in the electrode adhesive layer is 3 wt% or less or when the content of the first inorganic particles is more than 97 wt%, the electrode adhesion strength may be reduced. When the content of the first binder exceeds 20 wt% or the content of the first inorganic particles is less than 80 wt%, the heat resistance may deteriorate and excessive curling may occur. The curling phenomenon is caused by asymmetry in weight, moisture content, and drying rate between the electrode adhesive layer and the heat-resistant layer formed on opposite sides of the porous substrate. When the content of the first inorganic particles is less than 80 wt%, asymmetry with respect to the content of the second inorganic particles in the heat-resistant layer formed on the opposite side becomes severe, thereby promoting and intensifying curling.

The average particle size of the first inorganic particles may be from 100 to 500 nm. The average particle size of the first inorganic particles may be larger than the average pore size included in the porous substrate. When the average particle size of the first inorganic particles is equal to or smaller than the average pore size of the porous substrate, the inorganic particles may penetrate into the pores of the porous substrate and close the pores, thereby significantly decreasing the air permeability and ionic conductivity of the separator. The average particle size of the first inorganic particles may be from 100 to 500 nm, preferably from 200 to 400 nm, and more preferably from 300 to 400 nm, but is not limited thereto.

The first inorganic particles may include, for example, at least one selected from the group consisting of $SiO_2$, $AlO(OH)$, $Mg(OH)_2$, $Al(OH)_3$, $TiO_2$, $BaTiO_3$, $Li_2O$, $LiF$, $LiOH$, $Li_3N$, $BaO$, $Na_2O$, $Li_2CO_3$, $CaCO_3$, $LiAlO_2$, $Al_2O_3$, $SiO$, $SnO$, $SnO_2$, $PbO_2$, $ZnO$, $P_2O_5$, $CuO$, $MoO$, $V_2O_5$, $B_2O_3$, $Si_3N_4$, $CeO_2$, $Mn_3O_4$, $Sn_2P_2O_7$, $Sn_2B_2O_5$, $Sn_2BPO_6$, or a combination of two or more thereof. Preferably, the first inorganic particles may include $AlO(OH)$, $Mg(OH)_2$, $Al(OH)_3$, or $Al_2O_3$, but are not limited thereto.

The first binder may be an organic particle including a water-insoluble polymer. The term "water-insoluble polymer" as used in this specification refers to a polymer that is not dissolved in water and has a property of being dispersed or suspended in the form of fine particles in water, and is referred to as latex or emulsion. The water-insoluble polymer may be present in the form of fine particles as described above in the electrode adhesive layer, and may form and maintain pores together with the first inorganic particles.

The average particle size of the organic particles may be equal to or greater than the average particle size of the first inorganic particles, and preferably, may be greater than the average particle size of the first inorganic particles. In this case, the average particle size of the organic particles may be from 500 to 1,000 nm. When the average particle size of the organic particles is smaller than the average particle size of the first inorganic particles, for example, less than 500 nm, the organic particles may penetrate into the pores of the porous substrate or close the pores formed between the first inorganic particles, thereby significantly decreasing the air permeability and ionic conductivity of the separator. In particular, when the organic particles close the pores formed between the first inorganic particles, the moisture content remaining in the pores of the electrode adhesive layer may decrease, and consequently, asymmetry in terms of weight, moisture content, and drying rate relative to the heat-resistant layer may become more severe, thereby promoting and intensifying curling. Conversely, when the average particle size of the organic particles exceeds 1,000 nm, the surface area of the electrode adhesive layer may decrease, resulting in reduced electrode adhesion strength.

The water-insoluble polymer may include, for example, at least one selected from the group consisting of polyvinylidene fluoride, poly(vinylidene fluoride-co-hexafluoropropylene), poly(vinylidene fluoride-co-trichloroethylene), polymethyl methacrylate, polyacrylonitrile, ethylene-vinyl acetate, polyvinyl butyral, acrylonitrile-acrylic acid copolymer, ethylene-acrylic acid copolymer, styrene-butadiene copolymer, alkyl acrylate-acrylonitrile copolymer, acrylonitrile-styrene copolymer, acrylic rubber, and combinations of two or more thereof, but is not limited thereto.

The separator may include, on the other surface of the porous substrate, a heat-resistant layer including second inorganic particles and a second binder that mutually binds at least a part of the second inorganic particles to each other. The heat-resistant layer may also include a plurality of pores formed between the second inorganic particles, through which fluids and/or ions can pass.

The second inorganic particles may be of the same kind and/or the same nature as the first inorganic particles, and the average particle size thereof may also be the same as or similar to that of the first inorganic particles. In this case, the type and average particle size of the second inorganic particles may refer to those described above for the first inorganic particles. Meanwhile, if necessary, the type, properties, shape, and average particle size of the second inorganic particles may be different from those of the first inorganic particles.

The content of the second inorganic particles in the heat-resistant layer may be from 60 to 99 wt%. When the content of the second inorganic particles is less than 60 wt%, sufficient heat resistance may not be imparted. When the content exceeds 99 wt%, air permeability, ionic conductivity, and resistance characteristics of the separator may deteriorate, and the dispersibility of the inorganic particles may decrease, or the workability and processability during slurry coating may deteriorate.

The second binder may include a water-soluble polymer. The term "water-soluble polymer" as used in this specification refers to a polymer having a property of being dissolved in water such that it cannot be observed as particles. The water-soluble polymer may be melted or fused within the heat-resistant layer to mutually bind the second inorganic particles to each other and to bond the second inorganic particles to the porous substrate.

The water-soluble polymer may include, for example, at least one selected from the group consisting of polyacrylic acid, polyvinylpyrrolidone, polyvinyl acetate, polyimide, cellulose acetate, cellulose acetate butyrate, cellulose acetate propionate, cyanoethyl pullulan, cyanoethyl polyvinyl alcohol, cyanoethyl cellulose, hydroxyethyl cellulose, cyanoethyl sucrose, pullulan, carboxymethyl cellulose, polyvinyl alcohol, polyethylene oxide, polyethylene glycol, acrylonitrile copolymer, and combinations of two or more thereof, but is not limited thereto.

FIG. 1 is a schematic diagram illustrating the curling phenomenon and the method for measuring curl height of the separator according to one embodiment of the present invention. Referring to FIG. 1, the curl height may be measured according to the following steps (1) and (2): (1) Placing a separator having a length (machine direction, MD) and a width (transverse direction, TD) of 300 mm each on a horizontal reference plane such that the electrode adhesive layer faces the horizontal reference plane; and (2) After two hours under a humidity condition having a dew point of -10°C or lower at a temperature of 21°C, measuring the heights by which both ends of the separator in the machine direction (MD) and in the transverse direction (TD) are vertically spaced apart from the horizontal reference plane, and calculating the average value thereof.

The curl height of the separator may be 1.5 cm or less, preferably 1.2 cm or less, more preferably from 0 to 1.0 cm, and advantageously from 0 to 0.8 cm. When the curl height exceeds 1.5 cm, it may cause assembly defects in the battery.

The separator may satisfy at least one of the following conditions (i) to (iv).
(i) Electrode adhesion strength: 5 gf/25 mm or more, preferably from 10 to 30 gf/25 mm, more preferably from 15 to 25 gf/25 mm; (ii) Resistance: 0.700 $\Omega$ or less, preferably 0.680 $\Omega$ or less, more preferably 0.650 $\Omega$ or less; (iii) Thermal shrinkage rate in the machine direction (MD) at 150°C: 4.0% or less, preferably 2.2% or less, more preferably 2.1% or less; and (iv) Thermal shrinkage rate in the transverse direction (TD) at 150°C: 4.0% or less, preferably 1.5% or less, more preferably 1.4% or less.

Another aspect of the present invention provides a method for manufacturing a separator, comprising: (a) preparing a first coating slurry including first inorganic particles and a first binder that mutually binds at least a part of the first inorganic particles to each other; (b) preparing a second coating slurry including second inorganic particles and a second binder that mutually binds at least a part of the second inorganic particles to each other; (c) applying the first coating slurry onto one surface of a porous substrate and drying to form an electrode adhesive layer; and (d) applying the second coating slurry onto the other surface of the porous substrate and drying to form a heat-resistant layer; wherein the content of the first binder in the solid content of the first coating slurry is from 3 to 20 wt%, and steps (c) and (d) are performed simultaneously.

In steps (a) and (b), the types, properties, shapes, and average particle sizes of the first inorganic particles and the second inorganic particles, and the first binder and the second binder may be the same as those described above. The first coating slurry and the second coating slurry may be dispersions in which predetermined solid contents are dispersed in a solvent (medium). The solvent may be an oil-based solvent, a water-based solvent, or a combination thereof, and preferably, a water-based solvent, more preferably, water, but is not limited thereto.

The solid content of the first coating slurry may include the first inorganic particles and the first binder, and the solid content of the second coating slurry may include the second inorganic particles and the second binder. The content of the solid content in the first coating slurry may be from 20 to 40 wt%, and the content of the solid content in the second coating slurry may be from 10 to 30 wt%. The first coating slurry may contain more solid content than the second coating slurry.

In steps (c) and (d), the first coating slurry and the second coating slurry may be simultaneously applied onto one surface and the other surface of the porous substrate, respectively, and dried, to form the electrode adhesive layer on one surface and the heat-resistant layer on the other surface of the porous substrate. Conventionally, to form the electrode adhesive layer and the heat-resistant layer on one surface and the other surface of the porous substrate, respectively, a process is sequentially performed in which the slurry for forming the electrode adhesive layer is applied and dried, and then the slurry for forming the heat-resistant layer is applied and dried, or vice versa. Therefore, it has been difficult to improve productivity and economic efficiency.

In contrast, a method has been proposed in which coating and drying for forming the electrode adhesive layer and the heat-resistant layer are simultaneously performed on both surfaces of the porous substrate. However, due to differences in the composition and properties of the slurries applied to both surfaces of the porous substrate, that is, asymmetry, process conditions for both surfaces must be separately set, and thus improvement of productivity remains limited.

In the method for manufacturing the separator, by adjusting the composition, properties, and solid content of each of the first coating slurry and the second coating slurry during preparation, asymmetry in physical properties and/or process characteristics that may occur between the electrode adhesive layer and the heat-resistant layer even when the coating and drying processes are simultaneously carried out under identical conditions on both surfaces of the porous substrate can be effectively mitigated, and the manufactured separator can achieve a balanced realization of electrode adhesion, heat resistance, and conductivity.

Hereinafter, the embodiments of the present invention will be described in further detail through the following examples.

Preparation Example 1-1

A first coating slurry was prepared by uniformly dispersing 85 wt% of boehmite (AlO(OH)) having an average particle size of 300 nm as an inorganic particle and 15 wt% of an acrylic copolymer having an average particle size of 500 nm as an adhesive binder, with distilled water at a weight ratio of 30:70 between the solid content and distilled water.

Preparation Examples 1-2 to 1-7 and Comparative Preparation Examples 1-1 to 1-2

Except for changing the contents of boehmite (AlO(OH)) and the acrylic copolymer in the solid content as shown in Table 1 below, the first coating slurries were prepared in the same manner as in Preparation Example 1-1.

Comparative Preparation Example 1-3

A first coating slurry was prepared by uniformly dispersing 85 wt% of boehmite (AlO(OH)) having an average particle size of 500 nm as an inorganic particle and 15 wt% of an acrylic copolymer having an average particle size of 300 nm as an adhesive binder, with distilled water at a weight ratio of 30:70 between the solid content and distilled water.

Preparation Example 2-1

A second coating slurry was prepared by uniformly dispersing 97 wt% of boehmite (AlO(OH)) having an average particle size of 300 nm as an inorganic particle and 3 wt% of an acrylonitrile copolymer as an organic binder with distilled water at a weight ratio of 25:75 between the solid content and distilled water.

[Table 1]

| Item | Inorganic particle | Organic binder | Adhesive binder |
|---|---|---|---|
| Preparation Example 1-1 | 85 | 0 | 15 |
| Preparation Example 1-2 | 88 | 0 | 12 |
| Preparation Example 1-3 | 90 | 0 | 10 |
| Preparation Example 1-4 | 93 | 0 | 7 |
| Preparation Example 1-5 | 95 | 0 | 5 |
| Preparation Example 1-6 | 97 | 0 | 3 |
| Preparation Example 1-7 | 80 | 0 | 20 |
| Comparative Preparation Example 1-1 | 70 | 0 | 30 |
| Comparative Preparation Example 1-2 | 98 | 0 | 2 |

(continued)

| Item | Inorganic particle | Organic binder | Adhesive binder |
|---|---|---|---|
| Comparative Preparation Example 1-3 | 85 | 0 | 15 |
| Preparation Example 2-1 | 97 | 3 | 0 |
| (Unit: wt%) | | | |

Example 1

A separator was obtained by simultaneously roll-to-roll coating the first coating slurry prepared in Preparation Example 1-1 and the second coating slurry prepared in Preparation Example 2-1 onto one surface and the other surface, respectively, of a polyethylene porous substrate having a thickness of 9 $\mu$m and an air permeability of 90 sec/100 ml, each to a coating thickness of 2 $\mu$m, followed by drying. As a result, an electrode adhesive layer (derived from the first coating slurry) was formed on one surface of the porous substrate, and a heat-resistant layer (derived from the second coating slurry) was formed on the other surface.

Examples 2 to 7 and Comparative Examples 1 to 4

Except for changing the coating slurries applied to one surface and the other surface of the porous substrate as shown in Table 2 below, the separators were obtained in the same manner as in Example 1.

[Table 2]

| Item | One surface of the porous substrate | The other surface of the porous substrate |
|---|---|---|
| Example 1 | Preparation Example 1-1 | Preparation Example 2-1 |
| Example 2 | Preparation Example 1-2 | Preparation Example 2-1 |
| Example 3 | Preparation Example 1-3 | Preparation Example 2-1 |
| Example 4 | Preparation Example 1-4 | Preparation Example 2-1 |
| Example 5 | Preparation Example 1-5 | Preparation Example 2-1 |
| Example 6 | Preparation Example 1-6 | Preparation Example 2-1 |
| Example 7 | Preparation Example 1-7 | Preparation Example 2-1 |
| Comparative Example 1 | Comparative Preparation Example 1-1 | Preparation Example 2-1 |
| Comparative Example 2 | Comparative Preparation Example 1-2 | Preparation Example 2-1 |
| Comparative Example 3 | Comparative Preparation Example 1-3 | Preparation Example 2-1 |
| Comparative Example 4 | Preparation Example 1-3 | Preparation Example 1-3 |

Experimental Examples

The test methods for each physical property measured in the present invention are as follows. Unless otherwise specified, the measurements were made at room temperature (25°C). The physical properties of the separators prepared according to the Examples and Comparative Examples were measured, and the results are shown in Table 3 below.

-  Electrode Adhesion Strength (gf/25 mm): The separator (MD direction 180 mm $\times$ TD direction 25 mm) was laminated with an electrode so that the adhesive layer faced the electrode and then inserted into an aluminum pouch. The pouch was pressed for 30 seconds under conditions of 80°C and 1,000 kgf to adhere the separator and the electrode. Thereafter, using a UTM (Universal Testing Machine) manufactured by Shimadzu, the adhesion strength was measured while peeling the separator from the electrode.

-  Resistance ($\Omega$): An electrolyte was prepared by dissolving $LiPF_6$ at a molar concentration of 1.15 mol in a mixed solvent of ethylene carbonate and ethyl methyl carbonate at a volumetric ratio of 30:70. The separator was impregnated with the electrolyte to fabricate a coin cell, and the resistance was measured using an EIS (Electrochemical Impedance Spectroscopy) apparatus.

- Thermal Shrinkage Rate (%): A separator (MD direction 200 mm × TD direction 200 mm) was placed between A4 sheets and left in an oven at 150°C for 1 hour, then cooled to room temperature. The contracted lengths in the transverse (TD) and machine (MD) directions were measured, and the thermal shrinkage rate was calculated according to the following formula.

$$\text{Thermal shrinkage rate (\%)} = (l_3 - l_4) / l_3 \times 100$$

In the above formula, $l_3$ represents the width or length of the separator sample before shrinkage, and $l_4$ represents the width or length of the separator sample after shrinkage.

- Curl Height (cm): A separator (MD direction 300 mm × TD direction 300 mm) was placed flat on a horizontal reference plane with the electrode adhesive layer facing the reference plane and left for 2 hours. Then, the heights by which both ends of the separator in the MD and TD directions were spaced from the reference plane due to curling were measured (see FIG. 1), and the average value was calculated as the curl height.

[Table 3]

| Item | Electrode Adhesion Strength | Resistance | Thermal Shrinkage Rate (MD) | Thermal Shrinkage Rate (TD) | Curl Height |
|---|---|---|---|---|---|
| Example 1 | 26 | 0.661 | 2.2 | 1.5 | 1.2 |
| Example 2 | 23 | 0.645 | 2.1 | 1.5 | 1.1 |
| Example 3 | 20 | 0.636 | 2.1 | 1.5 | 0.8 |
| Example 4 | 18 | 0.622 | 2.0 | 1.4 | 0.6 |
| Example 5 | 15 | 0.614 | 1.8 | 1.3 | 0.5 |
| Example 6 | 5 | 0.611 | 1.7 | 1.3 | 0.5 |
| Example 7 | 35 | 0.681 | 3.3 | 3.6 | 1.4 |
| Comparative Example 1 | 45 | 0.720 | 5.8 | 5.0 | 3.1 |
| Comparative Example 2 | 4 | 0.603 | 1.7 | 1.3 | 0.3 |
| Comparative Example 3 | 24 | 0.668 | 2.6 | 2.8 | 2.5 |
| Comparative Example 4 | 21 | 0.790 | 28.0 | 26.0 | 0.2 |

The foregoing description of the present invention is for illustrative purposes, and those skilled in the art will appreciate that various modifications can be made without departing from the technical spirit or essential characteristics of the present invention. Therefore, the above-described embodiments should be understood to be illustrative and not restrictive in all respects. For example, components described as being in a singular form may be implemented in a distributed form, and likewise, components described as being distributed may be implemented in a combined form.
The scope of the present invention is defined by the claims that follow, and all modifications or variations derived from the meaning and scope of the claims and their equivalents should be construed as being included within the scope of the present invention.

**Claims**

1. A separator comprising:

a porous substrate;
an electrode adhesive layer provided on one surface of the porous substrate and including first inorganic particles and a first binder that mutually binds at least a part of the first inorganic particles to each other; and

a heat-resistant layer provided on the other surface of the porous substrate and including second inorganic particles and a second binder that mutually binds at least a part of the second inorganic particles to each other, wherein the content of the first binder in the electrode adhesive layer is from 3 to 20 wt%.

2. The separator according to claim 1,
wherein the porous substrate includes at least one selected from the group consisting of polyethylene, polypropylene, polybutylene, polymethylpentene, ethylene-vinyl acetate, ethylene-butyl acrylate, ethylene-ethyl acrylate, and copolymers or combinations of two or more thereof.

3. The separator according to claim 1,
wherein the average particle sizes of the first inorganic particles and the second inorganic particles are each from 100 to 500 nm.

4. The separator according to claim 3,
wherein each of the first inorganic particles and the second inorganic particles includes at least one selected from the group consisting of $SiO_2$, $AlO(OH)$, $Mg(OH)_2$, $Al(OH)_3$, $TiO_2$, $BaTiO_3$, $Li_2O$, $LiF$, $LiOH$, $Li_3N$, $BaO$, $Na_2O$, $Li_2CO_3$, $CaCO_3$, $LiAlO_2$, $Al_2O_3$, $SiO$, $SnO$, $SnO_2$, $PbO_2$, $ZnO$, $P_2O_5$, $CuO$, $MoO$, $V_2O_5$, $B_2O_3$, $Si_3N_4$, $CeO_2$, $Mn_3O_4$, $Sn_2P_2O_7$, $Sn_2B_2O_5$, $Sn_2BPO_6$, and combinations of two or more thereof.

5. The separator according to claim 3,
wherein the first binder is an organic particle including a water-insoluble polymer, and the second binder includes a water-soluble polymer.

6. The separator according to claim 5,
wherein the average particle size of the organic particle is equal to or greater than the average particle sizes of the first inorganic particles and the second inorganic particles.

7. The separator according to claim 6,
wherein the average particle size of the organic particle is from 500 to 1,000 nm.

8. The separator according to claim 1,

wherein the curl height of the separator is 1.5 cm or less,
and the curl height is measured according to a method including the following steps (1) and (2):

(1) placing a separator having a length (machine direction, MD) and a width (transverse direction, TD) of 300 mm each on a horizontal reference plane such that the electrode adhesive layer faces the horizontal reference plane; and
(2) after 2 hours under a humidity condition having a dew point of -10°C or less at a temperature of 21 °C, measuring the heights by which both ends of the separator in the machine direction (MD) and in the transverse direction (TD) are vertically spaced apart from the horizontal reference plane and calculating the average value thereof.

9. The separator according to claim 8,
wherein the separator satisfies at least one of the following conditions (i) to (iv):

(i) electrode adhesion strength of 5 gf/25 mm or more;
(ii) resistance of 0.700 Ω or less;
(iii) thermal shrinkage rate in the machine direction (MD) at 150°C of 4.0% or less; and
(iv) thermal shrinkage rate in the transverse direction (TD) at 150°C of 4.0% or less.

10. A method for manufacturing a separator according to any one of claims 1 to 9, comprising:

(a) preparing a first coating slurry including first inorganic particles and a first binder that mutually binds at least a part of the first inorganic particles to each other;
(b) preparing a second coating slurry including second inorganic particles and a second binder that mutually binds at least a part of the second inorganic particles to each other;
(c) applying the first coating slurry onto one surface of a porous substrate and drying to form an electrode adhesive layer; and

(d) applying the second coating slurry onto the other surface of the porous substrate and drying to form a heat-resistant layer,

wherein the content of the first binder in the solid content of the first coating slurry is from 3 to 20 wt%,

and steps (c) and (d) are performed simultaneously.

FIG. 1

## INTERNATIONAL SEARCH REPORT

| | International application No. |
|---|---|
| | **PCT/KR2024/007936** |

**A.    CLASSIFICATION OF SUBJECT MATTER**

**H01M 50/46**(2021.01)i; **H01M 50/446**(2021.01)i; **H01M 50/414**(2021.01)i; **H01M 50/457**(2021.01)i;
**H01M 50/417**(2021.01)i; **H01M 50/431**(2021.01)i; **H01M 50/403**(2021.01)i

According to International Patent Classification (IPC) or to both national classification and IPC

**B.    FIELDS SEARCHED**

Minimum documentation searched (classification system followed by classification symbols)

H01M 50/46(2021.01); H01M 10/0525(2010.01); H01M 2/16(2006.01); H01M 50/403(2021.01); H01M 50/409(2021.01); H01M 50/446(2021.01); H01M 50/451(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 바인더(binder), 유기입자(organic particle), 무기입자(inorganic particle), 접착층(adhesive layer), 내열층(heat resistance layer)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2023-0065150 A (SK INNOVATION CO., LTD. et al.) 11 May 2023 (2023-05-11) See paragraphs [0001], [0003], [0054], [0101]-[0103], [0107], [0147]-[0149] and [0163]; and table 1. | 1-4,8-10 |
| Y | | 5-7 |
| Y | KR 10-2022-0070098 A (W-SCOPE KOREA CO., LTD. et al.) 30 May 2022 (2022-05-30) See paragraphs [0038], [0043], [0049] and [0052]. | 5-7 |
| A | KR 10-2022-0161591 A (W-SCOPE KOREA CO., LTD. et al.) 07 December 2022 (2022-12-07) See entire document. | 1-10 |
| A | KR 10-2016-0078967 A (ZEON CORPORATION) 05 July 2016 (2016-07-05) See entire document. | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 September 2024** | **23 September 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/007936**

| C. | DOCUMENTS CONSIDERED TO BE RELEVANT | |
|---|---|---|
| Category* | Citation of document, with indication, where appropriate, of the relevant passages | Relevant to claim No. |
| A | US 2021-0005858 A1 (SAMSUNG SDI CO., LTD.) 07 January 2021 (2021-01-07)<br>See entire document. | 1-10 |

Form PCT/ISA/210 (second sheet) (July 2022)

**INTERNATIONAL SEARCH REPORT**
Information on patent family members

International application No.

**PCT/KR2024/007936**

| Patent document cited in search report | | | Publication date (day/month/year) | Patent family member(s) | | | Publication date (day/month/year) |
|---|---|---|---|---|---|---|---|
| KR | 10-2023-0065150 | A | 11 May 2023 | CN | 116073074 | A | 05 May 2023 |
| | | | | EP | 4178022 | A1 | 10 May 2023 |
| | | | | US | 2023-0137319 | A1 | 04 May 2023 |
| KR | 10-2022-0070098 | A | 30 May 2022 | KR | 10-2442905 | B1 | 15 September 2022 |
| KR | 10-2022-0161591 | A | 07 December 2022 | CN | 116830375 | A | 29 September 2023 |
| | | | | EP | 4277006 | A1 | 15 November 2023 |
| | | | | JP | 2024-506161 | A | 09 February 2024 |
| | | | | KR | 10-2023-0140442 | A | 06 October 2023 |
| | | | | KR | 10-2582948 | B1 | 27 September 2023 |
| | | | | US | 2023-0378607 | A1 | 23 November 2023 |
| | | | | WO | 2022-250255 | A1 | 01 December 2022 |
| KR | 10-2016-0078967 | A | 05 July 2016 | CN | 105659426 | A | 08 June 2016 |
| | | | | CN | 105659426 | B | 27 April 2018 |
| | | | | KR | 10-2301045 | B1 | 09 September 2021 |
| | | | | US | 11152667 | B2 | 19 October 2021 |
| | | | | US | 2016-0268565 | A1 | 15 September 2016 |
| | | | | WO | 2015-064411 | A1 | 07 May 2015 |
| US | 2021-0005858 | A1 | 07 January 2021 | CN | 111954943 | A | 17 November 2020 |
| | | | | CN | 111954943 | B | 25 August 2023 |
| | | | | EP | 3761399 | A1 | 06 January 2021 |
| | | | | EP | 3761399 | A4 | 01 December 2021 |
| | | | | KR | 10-2019-0102572 | A | 04 September 2019 |
| | | | | KR | 10-2210884 | B1 | 02 February 2021 |
| | | | | WO | 2019-164130 | A1 | 29 August 2019 |

Form PCT/ISA/210 (patent family annex) (July 2022)

**REFERENCES CITED IN THE DESCRIPTION**

**Non-patent literature cited in the description**

- *Macromolecules*, 2001, vol. 34 (19), 6812-6820